Europäisches Patentamt

European Patent Office

Office européen des brevets

(19)

(11) Veröffentlichungsnummer : **0 016 359**
**B1**

(12) **EUROPÄISCHE PATENTSCHRIFT**

(45) Veröffentlichungstag der Patentschrift :
13.10.82

(21) Anmeldenummer : 80100967.1

(22) Anmeldetag : 27.02.80

(51) Int. Cl.³ : **A 63 B 45/02**, B 29 C 25/00,
B 29 D 27/00

(54) Verfahren und Vorrichtung zur Herstellung eines Balles aus Schaumstoff mit Oberflächenprägung.

(30) Priorität : 17.03.79 DE 2910640

(43) Veröffentlichungstag der Anmeldung :
01.10.80 (Patentblatt 80/20)

(45) Bekanntmachung des Hinweises auf die Patenterteilung : 13.10.82 Patentblatt 82/41

(84) Benannte Vertragsstaaten :
AT BE CH FR GB IT NL SE

(56) Entgegenhaltungen :
CH A 325 554
CH A 519 384
DE B 2 844 193
DE U 7 730 611
FR A 2 083 203

(73) Patentinhaber : **METZELER SCHAUM GMBH**
**Donaustrasse 51**
**D-8940 Memmingen (DE)**

(72) Erfinder : **Bokelmann, Horst**
**Richard-Kirchner-Strasse 24**
**D-3590 Bad Wildungen (DE)**

(74) Vertreter : **Michelis, Theodor, Dipl.-Ing.**
**Westendstrasse 131**
**D-8000 München 2 (DE)**

Imprimerie Jouve, 18, rue St-Denis, 75001 Paris, France

EP 0 016 359 B1

Verfahren und Vorrichtung zur Herstellung eines Balles aus Schaumstoff mit Oberflächenprägung

Die Erfindung bezieht sich auf ein Verfahren zur Herstellung eines Balles aus Schaumstoff mit einer einem Lederball, beispielsweise einem Fußball entsprechenden Oberflächenprägung und auf eine Vorrichtung zur Durchführung dieses Verfahrens.

Bei der Herstellung von Spielbällen aus Kunststoff, vorzugsweise Schaumstoff, besteht Interesse, diese Kunststoffbälle mit einer Oberflächenprägung entsprechend der Oberflächenkontur eines Sportballes aus Leder oder dergleichen zu versehen, wie das beispielsweise in dem DE-U-77 30 611 oder der älteren Anmeldung P 28 44 193.2 & EP-A-10645 für einen Tennisball aus Schaumstoff beschrieben ist. Dabei wird eine geschlossene Konturlinie durch Abrollen auf einem entsprechenden Heizdraht eingebrannt.

Bei einem derartigen Verfahren ergeben sich jedoch Schwierigkeiten bei Bällen mit einer komplizierten Oberflächenprägung, wie das beispielsweise bei Fußbällen der Fall ist, deren Oberfläche in mehrere, sich gruppenweise in ihrer Ausrichtung auf den Ballumfang abwechselnde Abschnitte unterteilt ist. Auch würde, abgesehen von der Schwierigkeit, eine genaue Drehung zu erhalten, relativ viel Zeit benötigt, um die gesamte Oberfläche des Balles durch Abrollen entsprechend zu zeichnen.

Aufgabe der Erfindung ist es, ein Verfahren und eine Vorrichtung anzugeben, welche es gestattet, in einfacher Weise, schnell und ohne komplizierte, zeitraubende Bewegungsabläufe bei einfachem und kostensparendem Aufbau einer entsprechenden Vorrichtung eine genaue Oberflächenprägung eines Schaumstoffballes zu erhalten.

Diese Aufgabe wird gemäß der Erfindung durch ein Verfahren mit den Merkmalen des Anspruches 1, insbesondere unter Anwendung einer Vorrichtung mit den Merkmalen des Anspruches 3 gelöst.

Das Verfahren nach der Erfindung besteht dabei darin, daß die Oberflächenzeichnung in einem einzigen Brennarbeitsgang auf der gesamten Balloberfläche mit Hilfe von gleichzeitig geheizten Brennwerkzeugen vorgenommen wird.

Dabei ist es gemäß einer Weiterbildung des Erfindungsgedankens besonders vorteilhaft, daß der zu bearbeitende Ball von einer Zuführ- und Vereinzelungseinrichtung bei zurückgezogenem, oberen Brennwerkzeug in einer Ebene oberhalb der mittleren Werkzeuge auf ein Ball-Führungs-Element abgesetzt wird, wonach der Ball in seine Bearbeitungsposition zwischen den mittleren Werkzeugen abgesetzt wird, und gleichzeitig das obere Werkzeug bis auf den gleichen Abstand von der Balloberfläche, wie ihn die übrigen Werkzeuge besitzen, zugeführt wird. Nunmehr kann ein gleichzeitiges Zuführen aller am Umfang des Balles angeordneten Werkzeuge vorgenommen werden.

Dabei ist es vorteilhaft, daß die Vorrichtung zum Durchführen des Verfahrens derart aufgebaut ist, daß die Brennwerkzeuge zu dem Vorrichtungsmittelpunkt, welcher gleichzeitig die Bearbeitungsposition des Balles ist, hinweisen und auf diesen hin zentrisch zuführbar angeordnet sind.

Jedes Brennwerkzeug besitzt dabei vorzugsweise einen elektrisch beheizten Brennkopf mit in Längsrichtung leicht geschweiften Stegen, welche in Achsrichtung entsprechend der Kugelform des Balles eine Profilierung aufweisen, wobei die Kugelform auch in der Anordnung der Stege zu finden ist.

Dabei ist es sehr vorteilhaft, daß die Brennköpfe so ausgelegt sind, daß sechs an sich identische Brennköpfe gleichmäßig um den Umfang des Balles angeordnet sind, und sich die Brennköpfe lediglich durch ihre Ausrichtung zueinander unterscheiden. Dabei sind die Köpfe, ob in horizontaler oder in vertikaler Ebene gesehen, jeweils lediglich um 90° versetzt zueinander, so daß die Stege benachbarter Köpfe senkrecht zueinander stehen. Um einen einfachen und damit kostensparenden Aufbau der Vorrichtung zu erreichen, wurden zur Fixierung, Betätigung und Führung der Werkzeuge und des aus drei vertikal geführten Stangen bestehenden Ball-Führungs-Elementes im wesentlichen identische Mittel verwendet, so daß die Vorrichtung einen baukastenartigen aufbau besitzt. Dies ist nicht nur beim erstmaligen Erstellen der Vorrichtung, sondern auch bei der Lagerhaltung eventuell benötigter Ersatzteile besonders vorteilhaft.

Das Verfahren nach der Erfindung kann auch in einer leicht abgeänderten Art vorgenommen werden, und zwar kann das untere Brennwerkzeug unbeweglich am Vorrichtungstisch befestigt werden, während die gesamte vertikale Zustellbewegung nur durch die Ball-Führungs-Elemente vorgenommen wird. Dabei wird der Brennvorgang in zwei sehr kurzen aufeinanderfolgenden Etappen vorgenommen, und zwar wird zuerst über das Ball-Führungs-Element der Ball bis in die Bearbeitungsposition gebracht, bei gleichzeitigem Absenken des oberen Werkzeuges, wonach durch gleichzeitiges Zuführen der vier mittleren und des oberen Werkzeuges unter gleichzeitigem Zurückziehen der Zuführ-Stäbe die Oberfläche des Balles geprägt wird.

Wird eine entsprechende Zuführ- und Vereinzelungseinrichtung zum Bestücken der erfindungsgemäßen Vorrichtung sowie eine, möglicherweise durch die Zubring-Vereinzelungsvorrichtung vorgenommene, Entnahme des fertig geprägten Balles mit nachfolgender, dirigierter Ableitung vorgesehen, so kann die Vorrichtung nach der Erfindung auf einfachste Weise in einen automatischen Bearbeitungsablauf eingegliedert werden.

Weitere Merkmale der Vorrichtung nach der Erfindung sowie Abwandlungen und deren Vorteile werden im folgenden in Verbindung mit dem in der Zeichnung wiedergegebenen Ausführungsbeispiel erläutert.

In der Zeichnung zeigen

Figur 1 einen Schaumstoffball mit der entsprechenden Oberflächenprägung,

Figur 2 einen Brennkopf nach der Erfindung in Frontansicht,

Figur 3 einen axialen Schnitt nach den Linien III-III aus Fig. 4 durch den Brennkopf,

Figur 4 einen um 90° verschwenkt dargestellten, axialen Schnitt nach den Linien IV-IV aus Fig. 2 durch das Brennwerkzeug,

Figur 5 eine Frontansicht auf eine Vorrichtung nach der Erfindung,

Figur 6 eine Seitenansicht auf eine Vorrichtung nach der Erfindung.

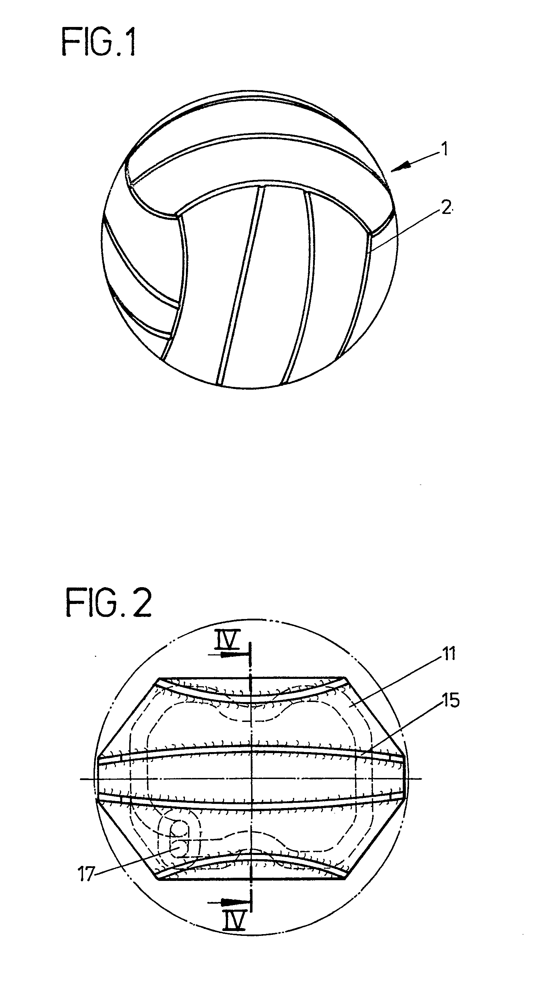

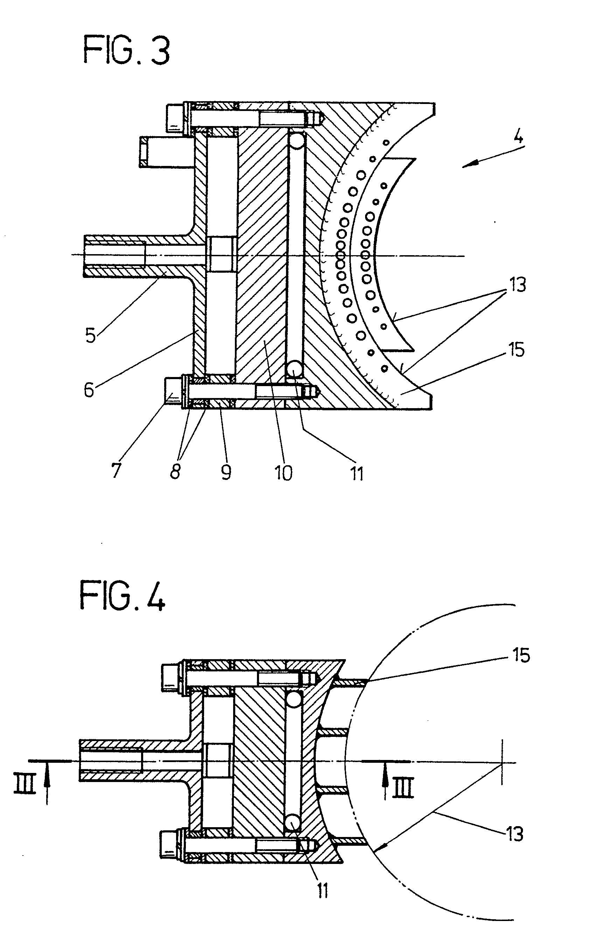

Fig. 1 zeigt einen Ball 1 mit einer Oberflächenprägung 2, wie sie mit Hilfe einer an Hand der Fig. 2 bis 6 beschriebenen Vorrichtung nach der Erfindung aufgebracht werden kann. Hierbei ist der Verlauf der Prägerillen dem Verlauf der Nähte eines Balles aus Leder nachgebildet.

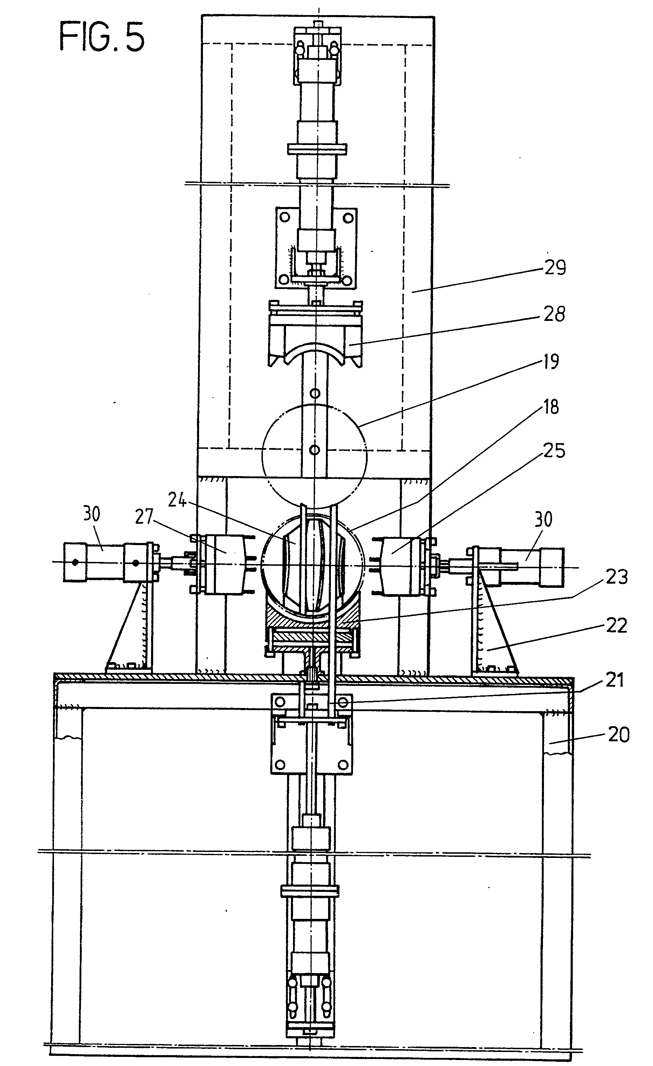

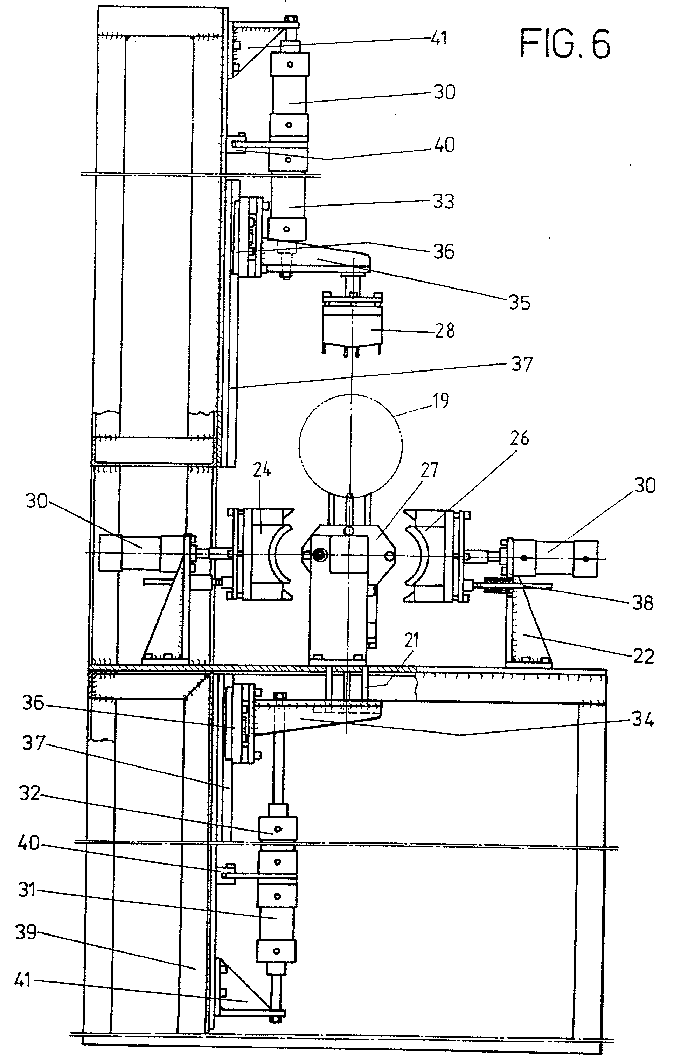

Die Vorrichtung nach der Erfindung selbst besteht, wie am besten aus den Fig. 5 und 6 zu ersehen ist, im wesentlichen aus einem Vorrichtungstisch 20 mit einem auf diesem hochragenden vertikalen Träger 29, welche beide als Schweißkonstruktion aus entsprechenden Profilen zusammengesetzt sind.

Auf der Platte des Tisches 20 sind vier Böcke 22 in gleichem Abstand von der Tischmitte angeschraubt. Jeder dieser Böcke 22 weist an seinem oberen Ende einen Zylinder 30 auf, an deren zum Vorrichtungsmittelpunkt weisenden Kolbenstangen jeweils ein mittleres Werkzeug 24, 25, 26, 27 befestigt ist. Durch eine Führung 38 erhalten die Werkzeuge eine genaue Positionierung und Ausrichtung. Ein unteres Werkzeug 23 ist auf der Tischplatte mit seiner aktiven Seite senkrecht nach oben weisend befestigt, derart, daß der zu bearbeitende Ball 1 in seiner Bearbeitungsposition 18 genau auf dem unterem Werkzeug 23 aufliegt. Desweiteren ist ein oberes Werkzeug 28 vorgesehen, welches in der Zeichnung in zurückgezogener Stellung dargestellt ist und dabei die Übernahmeposition 19 des zu bearbeitenden Balles 1 freigibt. In der Übernahmeposition 19 wird der zu bearbeitende Ball 1 von einem Ball-Führungs-Element 21 gehalten, welches aus drei vertikal verschiebbaren Stangen gebildet ist. Die drei Stangen des Ball-Führungs-Elementes 21 führen durch das untere Werkzeug 23 hindurch und sind gleichzeitig an einer unteren Halterung 34 befestigt. Diese untere Halterung 34 ist im wesentlichen gleich mit einer oberen Halterung 35, an welcher das obere Werkzeug 28 befestigt ist. Beide Halterungen 34 bzw. 35 sind auf je einer vertikalen Führung 36 befestigt, welche ihrerseits an vertikalen Führungsschienen 37 verschiebbar angeordnet sind. An den Halterungen 34 bzw. 35 ist je ein Zylinder 32 bzw. 33 in gleicher Weise jedoch in entgegengesetzter Richtung weisend, über seine Kolbenstange befestigt. An dem Boden des Zylinders 32 bzw. 33 ist über entsprechenden Flanschen jeweils ein Zylinder 30 bzw. 31 mit seinem Zylinderboden axial angeflanscht. Die Kolbenstange dieser nach außen hin zeigenden Zylinder 30 bzw. 31 sind an je einem Bock 41 befestigt, welcher seinerseits an dem vertikalen Träger 29 bzw. der vertikalen Verstärkung 39 festgeschraubt sind. Eine vertikale Führung wird über ein Führungsstück 40 gewährleistet, welches an den zwischen den jeweils aneinander gekoppelten Zylindern vorgesehenen Bodenflanschen befestigt ist. Die Zylinder 32 und 33 sind im wesentlichen gleich, besitzen also gleichen Hub, jedoch bei einer entgegengesetzten Arbeitsweise, so daß, wenn beispielsweise der Zylinder 33 zurückgezogen ist, der Zylinder 32 ausgefahren ist. Die Zylinder 30 der vier mittleren Werkzeuge 24 bis 27 als auch des oberen Werkzeuges 28 sind an sich wie Zylinder 31 identisch ausgebildet, sie haben also den gleichen Hub, der Unterschied besteht nur darin, daß der Zylinder 31 eine entgegengesetzte Wirkungsweise im Vergleich zu dem Zylinder 30 des oberen Werkzeuges besitzt, so daß bei ihrer Betätigung die Zylinder 30 ein Zustellen der Werkzeuge in Richtung der Bearbeitungsposition 18 verursachen, während gleichzeitig der Zylinder 31 sich nach außen bewegt bzw. ein Nach-unten-zurückziehen des Ball-Führungs-Elementes 21 bewirkt. Die Werkzeuge 23 bis 28 weisen an sich identisch ausgebildete Brennköpfe 4 auf, welche in den Fig. 2, 3 und 4 genau dargestellt sind. Der Brennkopf 4 an seiner aktiven Seite vier im wesentlichen in gleicher Richtung geführte Stege 15 auf, welche eine Längsschweifung 13 aufweisen. Diese Stege 15 sind gleichzeitig in sich, als auch in ihrer Ausrichtung, zueinander kugelförmig profiliert, so daß sie bei der Bearbeitung an der Oberfläche des balles satt anliegen. Der Brennkopf 4 besitzt an seiner von der aktiven Seite abgewandten Seite eine Ausnehmung, in welcher eine Heizspirale 11 nahe an der Außenkontur des Werkzeuges entlanggeführt wird. Elektrische Anschlüsse 17 erlauben die Speisung dieser Heizspirale 11 mit entsprechendem Strom. Der Brennkopf 4 ist über eine Dämmplatte 10 und entsprechenden Distanzbuchsen 9 an einem Deckel 6 mit Hilfe von Schrauben 7 befestigt. Dabei sind zwischen Distanzplatte, Distanzbuchsen, Deckel und Schraubenköpfen jeweils Isolierscheiben, beispielsweise Glimmerrundscheiben 8 vorgesehen. Der Deckel 6 besitzt einen zentralen Zapfen 5, welcher mit einem Innengewinde zur Befestigung beispielsweise an der Kolbenstange ausgestattet ist.

Die in der Zeichnung dargestellte Vorrichtung arbeitet folgendermaßen:

Ist die Vorrichtung betriebsbereit, also sind die Brennwerkzeuge 23 bis 28 entsprechend aufgeheizt, so wird mit Hilfe einer Zuführ- und Vereinzelungseinrichtung oder auch von Hand ein zu bearbeitender Ball in die Übernahmeposition 19 gebracht, wobei der Ball auf den Stangen des Ball-Führungs-Elementes 21 aufsitzt. Über diese Vereinzelungseinrichtung, von Hand oder auch durch Zeitschaltung, wird nun die Vorrichtung betätigt. Und zwar erhalten zuerst die Zylinder 32 und 33 Druckluft, wodurch ein gemeinsames Abwärtsbewegen der beiden Halterungen 34 und 35 verursacht wird, welche wiederum das obere Brennwerkzeug 28 bzw. das Ball-Führungs-Element 21 abwärts bewegen. Diese Abwärtsbewegung ist so ausgelegt, daß dabei der Ball aus der Übernahmeposition 19 in die Bearbeitungsposition 18 gebracht wird und gleichzeitig das obere Brennwerkzeug 28 auf gleichen Abstand zu der Balloberfläche zu stehen kommt, wie ihn die mittleren Werkzeuge 24 bis 27 besitzen. Durch Betätigung eines Schalters nach Erreichen der Bearbeitungsposition werden nunmehr die Zylinder 30 bzw. 31 betätigt, wodurch einerseits über den Zylinder 31 das Ball-Führungs-Element 21 den Ball auf dem unteren Werkzeug 23 absetzt und gleichzeitig durch die Zylinder 30 die vier mittleren Werkzeuge 24 bis 27 als auch das obere Werkzeug 28 rasch zugestellt werden, wodurch die Oberflächenzeichnung 2 in die Oberfläche des Balles 1 eingebrannt wird. Je nachdem, wie stark die Aufheizung des Brennwerkzeuges ist, ist auch die effektive Brennzeit sehr kurz, so daß die Werkzeuge sofort wieder zurückgezogen werden bzw. der Ball vom unteren Werkzeug wieder abgehoben wird, worauf gleich nachfolgend ein Hochheben des Balles in die Übernahmeposition 19 bei Anheben des oberen Werkzeuges 28 vorgenommen wird. Der bearbeitete Ball wird abschließend von den Stangen des Ball-Führungs-Elementes 21 entweder von Hand abgehoben oder bei einer automatischen Verkettung der Vorrichtung eventuell durch die Zuführung von einem neuen Ball durch die Vereinzelungseinrichtung gleich in die weiterführende Abführeinrichtung geschoben.

Die Verwirklichung der Erfindung, insbesondere der Vorrichtung nach der Erfindung, ist nicht auf das beschriebene Ausführungsbeispiel beschränkt. Die Betätigung der Brennwerkzeuge kann statt pneumatisch auch mit rein mechanisch arbeitenden Mitteln wie verschiedene Gestänge, Zahnräder oder dergleichen erfolgen. Auch können die Brennwerkzeuge in anderer Weise aufgeheizt werden, beispielsweise statt mit normalem Netzstrom mit Hochfrequenzströmen, wodurch ein rasches Aufheizen der Brennwerkzeuge im Augenblick ihrer Zustellung erreicht werden kann.

### Ansprüche

1. Verfahren zur Herstellung eines Balles (1) aus Schaumstoff mit einer der Zeichnung eines Laderballes, beispielsweise eines Fußballes, entsprechenden Oberflächenzeichnung (2), dadurch gekennzeichnet, daß die Oberflächenzeichnung (2) in einem einzigen Brennarbeitsgang auf der gesamten Balloberfläche mit Hilfe von gleichzeitig geheizten Brennwerkzeugen (23 bis 28) vorgenommen wird.

2. Verfahren nach Anspruch 1, dadurch gekennzeichnet, daß der zu bearbeitende Schaumstoffball (1) von einer Zuführ- und Vereinzelungseinrichtung in einer Übernahmeposition (19) oberhalb seiner Bearbeitungsposition (18) bei entsprechend zurückgezogenem, oberen Brennwerkzeug (28) auf ein Ball-Führungs-Element (21) abgesetzt wird, wonach durch Absenken des Führungselementes (21) bei gleichzeitigem Absenken des oberen Werkzeuges (28) der Ball (1) in seine Bearbeitungsposition (18) gebracht wird, und das obere Werkzeug (28) den gleichen Abstand zur Balloberfläche erhält wie die restlichen Werkzeuge (23 bis 27).

3. Vorrichtung zur Herstellung eines Balles (1) aus Schaumstoff mit einer einem Lederball entsprechenden Oberflächenzeichnung (2), die eine Zuführ- und Vereinzelungseinrichtung, ein Ballführungselement (21) und mehrere Brennwerkzeuge (23 bis 28) umfaßt, dadurch gekennzeichnet, daß die Brennwerkzeuge (23 bis 28) in den drei Koordinatenrichtungen strahlenförmig um einen Vorrichtungsmittelpunkt (Bearbeitungsposition 18) und radial zu diesem Mittelpunkt bewegbar sind sowie Heizkörper (11) zum gleichzeitigen Aufheizen aller Brennwerkzeuge (23 bis 28) aufweisen.

4. Vorrichtung nach Anspruch 3, dadurch gekennzeichnet, daß jedes Brennwerkzeug (23 bis 28) einen elektrisch beheizten Brennkopf (4) mit Stegen (15) besitzt, die sowohl in ihrer Anordnung als auch in ihrer geschweiften Ausbildung der Kugelform des Balles (1) angepaßt sind.

5. Vorrichtung nach Anspruch 4, dadurch gekennzeichnet, daß die sechs Brennköpfe (4) identisch ausgebildet sind, die sich nur in ihrer Ausrichtung voneinander unterscheiden, wobei die Köpfe abwechselnd — gleich ob in horizontaler oder vertikaler Ebene gesehen — jeweils um 90° gedreht um den Ballumfang angeordnet sind, so daß jeweils ein Brennkopf (4) mit horizontal verlaufenden Brennstegen (15) von Brennköpfen mit vertikal verlaufenden Brennstegen (15) umgeben ist und umgekehrt.

6. Vorrichtung nach Anspruch 3, dadurch gekennzeichnet, daß das Ball-Führungs-Element (21) aus drei senkrecht geführten Stangen besteht, die durch das untere Brennwerkzeug (23) hindurchgehen und in diesem zurückziehbar geführt sind.

7. Vorrichtung nach Anspruch 3 bis 5, dadurchgekennzeichnet, daß das untere Brennwerkzeug (23) am Vorrichtungstisch (20) unbeweglich befestigt ist, während die übrigen (fünf) Brennwerkzeuge (24 bis 28) in Richtung auf die durch das untere Brennwerkzeug (23) definierte Bearbeitungsposition verschiebbar gelagert sind.

8. Vorrichtung nach Anspruch 3 bis 7, gekennzeichnet durch einen Aufbau in Baukastenform, wobei die mittleren Werkzeuge (24 bis 27) im wesentlichen identische Aufnahme-, Betätigungs- und Fixierungselemente besitzen und wobei Betätigung, Aufnahme und genaue vertikale Führung des oberen Brennwerkzeuges (28) bzw. des unteren Brennwerkzeuges (23) und des Ballführungselementes (21) im wesentlichen gleich sind.

## Claims

1. A method of producing o foam ball (1) which has a surface pattern (2) corresponding to the pattern on a leather ball, for example a football, characterised in that the surface pattern (2) is produced in a single branding operating on the entire surface of the ball by means of simultaneously heated branding tools (23 to 28).

2. A method according to claim 1, characterised in that the foam ball (1) to be treated is deposited on a ball-guide element (21) by a delivery and separation device into a transfer position (19) above its treatment position (18) when the top branding tool (28) is suitably withdrawn, after which the ball (1) is brought into its treatment position (18) by a lowering of the guide element (21) with a lowering of the top tool (28), the top tool (28) then having the same spacing from the surface of the ball as the other tools (23 to 27).

3. An apparatus for the production of a foam ball (1) having a surface pattern (2) corresponding to a leather ball, which apparatus comprises a delivery and separation device, a ball guide element (21) and several branding tools (23 to 28), characterised in that the branding tools (23 to 28) are movable in the three co-ordinate directions in a radiated manner around a centre point of the apparatus (treatment position 18) and radially of this centre point, and the tools also have heating bodies (11) for simultaneously heating all the branding tools (23 to 28).

4. An apparatus according to claim 3, characterised in that each branding tool (23 to 28) has an electrically heated branding head (4) with ridges (15) which are adapted to the spherical shape of the ball (1) both in their layout as well as in their curved design.

5. An apparatus according to claim 4, characterised in that the six branding heads (4) are of an identical design, differering only in their orientation, whereby the heads are alternately positioned — equally whether seen in a horizontal or vertical plane — around the circumference of the ball, in each case rotated by 90°, so that each branding head (4) having horizontally extending branding ridges (15) is surrounded by branding heads having vertically extending ridges (15) and vice versa.

6. An apparatus according to claim 3, characterised in that the ball guide element (21) comprises three vertical rods which penetrate the bottom branding tool (23) and are guided rectractably therein.

7. An apparatus according to claims 3 to 5, characterised in that the bottom branding tool (23) is secured so that it cannot move on the apparatus table (20), whereas the other (five) tools (24 to 28) are mounted displaceably towards the treatment position which is defined by the bottom branding tool (23).

8. An apparatus according to claims 3 to 7, characterised by a construction in kit form, wherein the central tools (24 to 27) have substantially identical accommodating, actuating and fixing elements and wherein actuation, accommodation and precisely vertical guidance of the top branding tool (28) or of the bottom branding tool (23) and of the ball guide element (21) are essentially the same.

## Revendications

1. Procédé de fabrication d'un ballon (1) en matière mousse ayant un dessin (2) en surface correspondant à celui d'un ballon en cuir, par exemple d'un ballon de football, caractérisé en ce qu'il consiste à exécuter le dessin (2) en surface en un seul processus de travail par marquage à chaud sur toute la surface du ballon à l'aide d'outils (23 à 28) de marquage à chaud chauffés simultanément.

2. Procédé suivant la revendication 1, caractérisé en ce qu'il consiste à déposer, par un dispositif d'amenée et d'individualisation des ballons, sur un élément (21) de guidage de ballon, le ballon (1) en matière mousse à traiter en une position (19) de prise en charge au-dessus de sa position (18) de traitement, alors que l'outil (28) supérieur de marquage à chaud est en retrait d'une manière correspondante, puis à mettre le ballon (1) dans sa position de traitement par abaissement de l'élément (21) de guidage, avec abaissement concomitant de l'outil (28) supérieur, celui-ci restant à la même distance de la surface du ballon que les outils (23 à 27) restants.

3. Installation de fabrication d'un ballon (1) en matière mousse ayant un dessin (2) en surface correspondant à celui d'un ballon en cuir, qui comprend un dispositif d'amenée et d'individualisation des ballons, un élément (21) de guidage du ballon et plusieurs outils (23 à 28) de marquage à chaud, caractérisée en ce que les outils (23 à 28) de marquage à chaud rayonnent suivant les trois directions de coordonnées autour d'un centre de l'installation (position 18 de traitement) et peuvent se déplacer radialement vers ce centre des corps de chauffe (11) étant prévus pour le chauffage simultané de tous les outils (23 à 28) de marquage à chaud.

4. Installation suivant la revendication 3, caractérisée en ce que chaque outil (23 à 28) de marquage à chaud possède une tête (4) de marquage à chaud chauffée par voie électrique et munie de barrettes (15), qui sont adaptées tant par leur disposition que par leur structure courbée à la forme sphérique du ballon (1).

5. Installation suivant la revendication 4, caractérisée en ce que les six têtes (4) de marquage à chaud sont agencées de manière identique et ne se distinguent entre elles que par leur orientations, les têtes, qu'on les considère suivant un plan horizontal ou vertical, étant disposées autour du pourtour du ballon en alternance à 90° l'une de l'autre, en sorte que chaque tête (4) de marquage à chaud à barrettes (15) de marquage à chaud horizontales soit entourée de têtes (4) à barrettes (15) de marquage à chaud verticales et inversement.

6. Installation suivant la revendication 3, caractérisée en ce que l'élément (21) de guidage du ballon est constitué de trois barres guidées verticalement qui passent dans l'outil (23) inférieur de marquage à chaud et qui y sont guidées de manière à pouvoir s'y rétracter.

7. Installation suivant l'une des revendications 3 à 5, caractérisée en ce que l'outil (23) inférieur de marquage à chaud est fixé sans possibilité de déplacement à la table (20) de l'installation tandis que les (cinq) autres outils (24 à 28) de marquage à chaud sont montés coulissant dans la direction de la position de traitement définie par l'outil (23) inférieur de marquage à chaud.

8. Installation suivant l'une des revendications 3 à 7, caractérisée par une structure modulaire, les outils (24 à 27) médians ayant des éléments de réception, d'actionnement et de fixation sensiblement identiques, et l'actionnement, la réception et le guidage vertical précis de l'outil (28) supérieur de marquage à chaud ou de l'outil (23) inférieur de marquage à chaud et de l'élément (21) de guidage du ballon étant sensiblement identiques.

FIG.1

FIG.2

FIG. 3

FIG. 4

FIG.5

29

28

19

18

25

24

27

30

30

23

22

21

20

3

FIG.6